# EUROPEAN PATENT APPLICATION

(11) **EP 2 833 642 A1**
(43) Date of publication of application: **04.02.2015**
(21) Application number: 14153925.4
(22) Date of filing: 05.02.2014
(51) Int. Cl.: H04N 21/45, H04N 21/454, H04N 21/475

(54) **Display apparatus and display method using the same**

(30) Priority: 30.07.2013 KR 20130090385
(71) Applicant: Samsung Electronics Co., Ltd, Gyeonggi-do 443-742 (KR)
(72) Inventor: Im, Sang-kyun, Seoul (KR); Lee, Cheon-seong, Gyeonggi-do (KR)
(74) Representative: Instone, Terry

(57) **Abstract**

Provided are a display apparatus and a display method using the same. The display method includes displaying a screen for inputting a viewing restriction condition for contents that are divided into a plurality of sections and have different pieces of section information according to the sections; and displaying the contents, when the viewing restriction condition is input, in a state where viewing of a section corresponding to the viewing restriction condition in the plurality of sections is restricted.

## Description

### BACKGROUND

### 1. Field

An aspect or aspects of the present invention relates to a display apparatus and a display method using the same, and more particularly, to a display apparatus and a display method using the same which are capable of restricting viewing of contents in a fixed section.

### 2. Description of the Related Art

Along with the development of electronic technology, various types of electronic devices have been developed and supplied. Users easily access various types of display apparatuses in their daily lives from large-sized display apparatuses such as a TV to small-sized display apparatuses such as a mobile phone.

Sizes and types of display apparatuses have been diversified, and types of displayable contents have been also diversified. However, many contents that have been provided indiscreetly include details not appropriate for viewing by children or youngsters. In addition, even though viewers are adults, the viewers may not desire to view some contents. However, content providers provide contents indiscreetly with no consideration of such a situation.

In addition, in recent years, contents are graded according to viewable ages after going through deliberation of a fixed standard, and when the contents are viewable by viewers over a specific age, a display apparatus is configured to display a message notifying a viewable age in the beginning of the display of the contents, or to display the contents only when a password is input thereto. However, the method of displaying a message notifying a viewable age is not enforceable, and anyone can easily input the password without regard to a viewable age, and thus these methods are less effective.

In addition, when viewers desire to view most of sections of contents but do not desire to view details, scenes, and topics of specific sections of the contents, it is difficult to effectively block only the specific sections.

Therefore, there is a need for a technique that allows viewers to set sections the viewers do not desire to view, and to block the display of the set sections.

### SUMMARY

According to the present invention there is provided an apparatus and method as set forth in the appended claims. Other features of the invention will be apparent from the dependent claims, and the description which follows.

Additional aspects and/or advantages will be set forth in part in the description which follows and, in part, will be apparent from the description, or may be learned by practice of the invention.

The present invention is contrived in view of such situations, and an aspect of the embodiments thereof is to provide a display apparatus and a display method using the same which are capable of setting a viewing restriction condition and blocking a section of contents which corresponds to the set condition.

According to an aspect of the present invention, a display method of a display apparatus includes displaying a screen for inputting a viewing restriction condition for contents that are divided into a plurality of sections and have different pieces of section information according to the sections; and displaying the contents, when the viewing restriction condition is intput, in a state where viewing of a section corresponding to the viewing restriction condition in the plurality of sections is restricted.

Meanwhile, the displaying of the contents may include comparing section information of each of the plurality of sections with the input viewing restriction condition; and performing viewing restriction processing on a section having section information corresponding to the viewing restriction condition in the plurality of sections.

In addition, the section information may include at least one of viewing restriction age information and context information for each section.

The section may be divided into at least one frame, and a mark indicating associated section information may be provided in a region within each frame. However, it is understood that the section may be divided into at least one field or divided into smaller than frame.

In addition, the screen for setting a viewing restriction condition may include a plurality of viewing restriction options in which a viewing restriction age and a context are combined. At least one of colors and shapes of the plurality of viewing restriction options may be different from each other according to the options.

Meanwhile, the viewing restriction processing may include at least one of: alternative image display processing for displaying an alternative image during a section corresponding to the viewing restriction section, filtering processing for filtering the section corresponding to the viewing restriction condition, masking processing for masking the section corresponding to the viewing restriction condition, and mosaic processing for applying a mosaic effect to the section corresponding to the viewing restriction condition.

According to another aspect of the present invention, a display apparatus includes a receiver configured to receive contents divided into a plurality of sections and having different pieces of section information according to the sections; a display configured to display a screen for inputting a viewing restriction condition for the contents; a user interface configured to receive the viewing restriction condition; a storage configured to store the viewing restriction condition that is input through the user interface; and a controller configured to control the display to display the contents in a state where viewing of a section corresponding to the viewing restriction condition in the plurality of sections is restricted.

The controller may compare section information of each of the plurality of sections with the input viewing restriction condition, and may perform viewing restriction processing on a section having section information corresponding to the viewing restriction condition in the plurality of sections.

Meanwhile, the section information may include at least one of viewing restriction age information and context information for each section.

In addition, the section may be divided into at least one frame, and a mark indicating associated section information may be provided in a region within each frame. However, it is not limited thereto.

Meanwhile, the screen for setting a viewing restriction condition may include a plurality of viewing restriction options in which a viewing restriction age and a context are combined. At least one of colors and shapes of the plurality of viewing restriction options may be different from each other according to the options.

In addition, the viewing restriction processing may include at least one of: alternative image display processing for displaying an alternative image during a section corresponding to the viewing restriction section, filtering processing for filtering the section corresponding to the viewing restriction condition, masking processing for masking the section corresponding to the viewing restriction condition, and mosaic processing for applying a mosaic effect to the section corresponding to the viewing restriction condition.

According to various embodiments of the present invention, provided are a display apparatus and a display method using the same which are capable of setting a viewing restriction condition and blocking a section of contents which corresponds to the set condition.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating a configuration of a display apparatus according to an embodiment of the present invention;
FIGS. 2 and 3 are diagrams illustrating examples in which a viewing restriction condition is input to a display apparatus according to embodiments of the present invention;
FIGS. 4 to 6 are diagrams illustrating examples in which contents are displayed in a state where viewing of sections corresponding to a viewing restriction condition is restricted;
FIG. 7 is a diagram illustrating an example in which a content providing apparatus transmits contents having section information to a display apparatus; and
FIG. 8 is a flow chart illustrating a display method according to an embodiment of the present invention.

### DETAILED DESCRIPTION

Reference will now be made in detail to embodiments, examples of which are illustrated in the accompanying drawings. Also, while describing the embodiments, detailed descriptions about related well-known functions or configurations that may diminish the clarity of the points of the embodiments of the present invention are omitted. Terms or words used herein shall not be restricted to their common or dictionary meanings, and have meanings corresponding to technical aspects of the embodiments of the present invention so as to most suitably express the embodiments of the present invention.

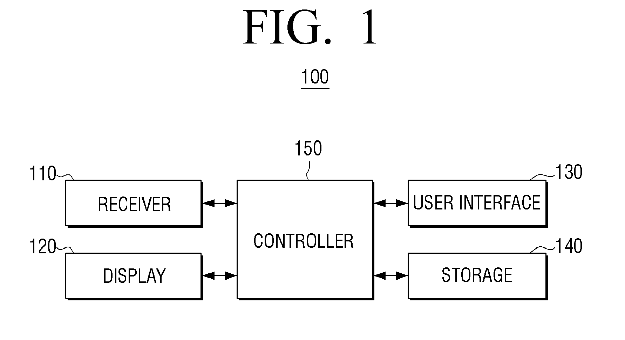

FIG. 1 is a block diagram illustrating a configuration of a display apparatus according to an embodiment of the present invention. As illustrated in FIG. 1, a display apparatus 100 may include a receiver 110, a display 120, a user interface 130, a storage 140, and a controller 150. At this time, the display apparatus 100 may be a TV, but this is just illustrative. The display apparatus 100 may be configured as any of various electronic apparatuses, such as a tablet PC, a notebook computer, a mobile phone, or a smart phone, which have the display 120.

The receiver 110 is a component for receiving contents. The receiver 110 may receive various contents from various sources according to an aspect of the embodiment. Specifically, the receiver 110 may receive various broadcasting signals transmitted from a broadcasting station through an RF communication network, or may receive contents from various server apparatuses through an IP network. A detailed configuration and a reception method of the receiver110 may be modified in various ways according to another aspect of the embodiment.

Meanwhile, contents received through the receiver 110 may include multimedia contents. The term "multimedia contents" as used herein means contents constituted by video data, audio data, and the like, in a similar manner to 2D or 3D contents. The term "video data" as used herein means data constituting a plurality of video frames. The video data may be divided into a plurality of sections constituted by at least one frame. In addition, each of the sections may be associated with section information.

The display 120 is a component or an apparatus for displaying an image. The display 120 may display all contents transmitted from a content transmission apparatus 200. In addition, when a section of contents which includes a context corresponding to a viewing restriction condition is displayed, the display 120 may display an alternative image or an alternative message, or may display the section of the contents which includes the context corresponding to the viewing restriction condition by performing mosaic processing on the section.

The term "viewing restriction condition" as used herein means a condition for imposing restrictions not to perform a display on the display 120. That is, the term "viewing restriction condition" means a condition for controlling the display 120 not to display a section of contents which includes a specific context. The context is a comprehensive concept including details, a topic, a connection, an atmosphere, and the like of contents which are included in each section.

In addition, the display120 may display a screen 300 for inputting a viewing restriction condition for contents. For example, the display 120 may display the screen 330 for inputting a viewing restriction condition which includes a plurality of viewing restriction conditions so as to receive a user command to select the viewing restriction condition, or may display the screen 300 for inputting a viewing restriction condition which includes a condition search window so as to receive a user command to search for and select the viewing restriction condition.

The user interface130 is a component for inputting a user command. All user commands for controlling the display apparatus 100 may be input through the user interface 130. When the display 120 of the display apparatus 100 includes a touch pad, the user interface 130 may be included in the touch pad or may be configured as a remote controller or a mobile phone. When the user interface 130 is configured as a remote controller or a mobile phone, the display apparatus 100 may receive a user command in a remote manner.

In particular, the user interface 130 may receive the viewing restriction condition for contents. That is, the user interface 130 may receive a user command to select at least one of the plurality of viewing restriction conditions displayed on the display 120, which will be described below in detail.

The storage 140 stores various programs for driving the display apparatus 100 and data. For example, the storage 140 may store an operating system (OS) for driving the display apparatus 100, an application for performing various functions, data used during the execution of the application, and the like. In addition, the storage 140 may include a program for executing viewing restriction processing for contents, on the basis of section information and the viewing restriction condition. Besides, the storage 140 may store various pieces of software such as a base module, a sensing module, a communication module, a presentation module, a web browser module, or a service module.

In addition, the storage 140 may store the viewing restriction condition that is input through the user interface 130. That is, the storage 140 may store the input viewing restriction condition so that the display apparatus 100 may control contents displayed according to a viewing restriction condition previously stored therein even though the display apparatus 100 does not receive a viewing restriction condition whenever it displays contents.

The controller 150 is a component for controlling overall operations of the display apparatus 100. The controller150 may control the display 120 to display contents in a state where the viewing of a section corresponding to the viewing restriction condition in a plurality of sections is restricted.

Specifically, when the controller 150 receives contents through the receiver 110, the controller 150 demultiplexes the received contents to detect video data, audio data, and the like. The controller 150 decodes the video data to detect a plurality of video frames. In addition, the controller 150 confirms section information of each video frame. The controller 150 compares the confirmed section information with the viewing restriction condition previously stored in the storage 140, and selects a section of which viewing is to be restricted. The controller 150 controls the display 120 to display contents while performing viewing restriction processing on the section that is selected as the viewing restriction section. Thus, a viewer may restrictively view at least a part of contents according to a condition set by himself or herself. For example, when a viewer sets a viewing restriction condition so that viewers aged 19 and below may not view the contents, the viewing of scenes that may not be viewed by viewers aged 19 and below are restricted by the viewing restriction processing, and the rest of scenes may be displayed normally.

The viewing restriction processing may be modified in various ways according to the embodiment. For example, the viewing restriction processing may be alternative image display processing for displaying an alternative image during a viewing restriction section, filtering processing for filtering a section corresponding to a viewing restriction condition, masking processing for masking a section corresponding to a viewing restriction condition, mosaic processing for applying a mosaic effect to a section corresponding to a viewing restriction condition, and the like. Each viewing restriction processing will be described below in detail.

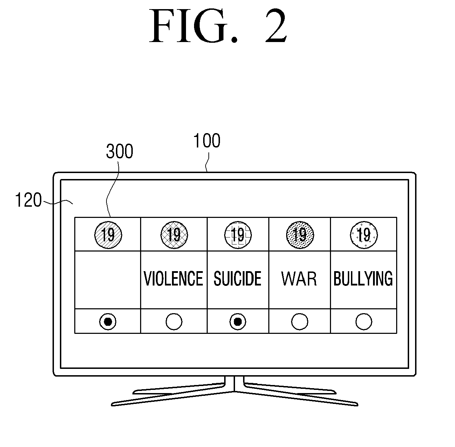

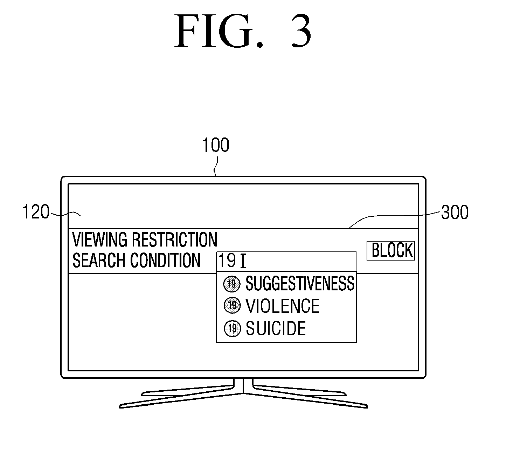

FIGS. 2 and 3 are diagrams illustrating examples in which a viewing restriction condition is input to the display apparatus 100. FIGS. 2 and 3 illustrate a state where the display apparatus 100 is configured as a TV.

As illustrated in FIG. 2, the display apparatus 100 may display the screen 300 for inputting a viewing restriction condition to the display 120. The screen 300 for inputting a viewing restriction condition may be displayed on a portion of the display 120 or may be displayed on the entirety of the display 120.

The screen 300 for inputting a viewing restriction condition may include at least one viewing restriction condition. That is, the screen 300 for inputting a viewing restriction condition may include various examples for restricting viewing. That is, as illustrated in FIG. 2, the screen 300 for inputting a viewing restriction condition may include a plurality of viewing restriction options in which a viewing restriction age and/or various contexts such as suggestiveness, violence, suicide, war, or bullying are combined. In addition, the screen 300 for inputting a viewing restriction condition may be displayed in association with marks having colors or shapes that are different from each other according to the plurality of viewing restriction options, and may show the selection or non-selection of a user.

For example, many of contents including contexts such as suggestiveness, violence, suicide, war, or bullying may be viewed by viewers aged 19 and above. Thus, each of the marks may be expressed by a combination of the number 19 indicating that viewers aged 19 and above can view the contents, and each of colors or figures which are different from each other, capable of being discriminated according to contexts such as suggestiveness, violence, suicide, war, or bullying. That is, although the marks illustrated in FIG. 2 are expressed in different manners according to contexts by using the number 19 and a difference in shade, the marks may be expressed by different colors (for example, suggestiveness is expressed by red, violence is expressed by blue, suicide is expressed by yellow, war is expressed by green, and bullying is expressed by black) or may be expressed by different figures (for example, suggestiveness is expressed by a circle, violence is expressed by a triangle, suicide is expressed by a square, war is expressed by a star, and bullying is expressed by an X).

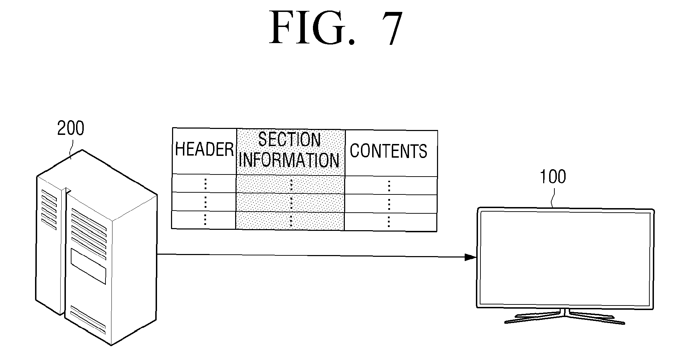

In addition, the above-mentioned mark may be expressed by a color or figure which is previously set in each section of contents provided to the display apparatus 100 from the content transmission apparatus 200(shown in FIG. 7). That is, when the content transmission apparatus 200 sets the shape of a mark typically used and provides contents including the set mark, the display apparatus 100 may display the screen 300 for inputting a viewing restriction condition which includes the mark having the shape set by the content transmission apparatus 200.

Meanwhile, the mark may be included in contents and displayed. That is, the contents are divided into a plurality of sections, each of the sections may include at least one frame, and the mark may be displayed in a region of each frame. Accordingly, the shape and color of the mark may be displayed by varying according to details of the section including each frame as described above.

Meanwhile, one or more viewing restriction conditions may be selected through the user interface 130. That is, as illustrated in FIG. 2, suggestiveness and suicide may be selected at the same time. When suggestiveness and suicide are selected and the details of the contents to be displayed include suggestiveness or suicide, a section including suggestiveness or suicide is blocked, and thus the display 120 does not display the blocked section. A method of blocking the section may be alternative image display processing, filtering processing, or the like, and the details thereof will be described below.

Meanwhile, as illustrated in FIG. 3, the screen 300 for inputting a viewing restriction condition may include a condition search window. That is, a user may search for a viewing restriction condition and may input the viewing restriction condition for performing blocking by using the user interface 130.

Specifically, when a user command to search for a viewing restriction condition is remotely input to the user interface 130 by using a remote controller or a mobile phone, the screen 300 for inputting a viewing restriction condition may display a viewing restriction condition beginning with an input word in previously stored viewing restriction conditions. That is, as illustrated in FIG. 3, when the number "19" is input to a condition search window, the screen 300 for inputting a viewing restriction condition may display all viewing restriction conditions beginning with the number 19. Thus, even though an exact viewing restriction condition is not input to the condition search window, the display apparatus 100 may easily block the viewing restriction condition to be blocked in the previously stored viewing restriction conditions.

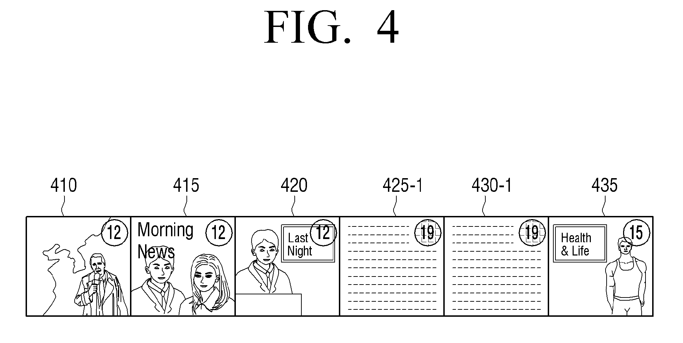

Meanwhile, when the viewing restriction condition is input through the screen 300 for inputting a viewing restriction condition, the display 120 may display contents in a state where viewing of a section corresponding to the input viewing restriction condition is restricted. FIGS. 4 to 6 illustrate various examples in which viewing are restricted.

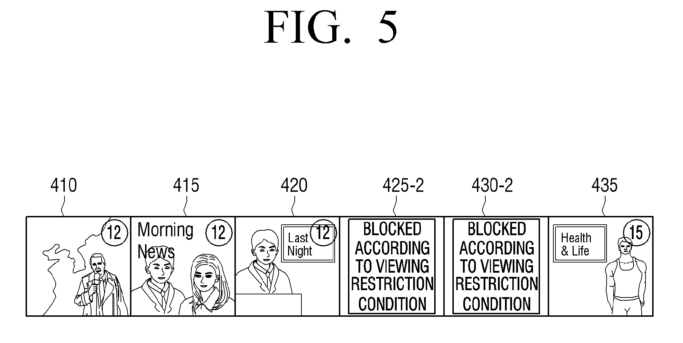

Specifically, FIGS. 4 and 5 illustrate examples in which the display apparatus 100 displays morning news. The morning news is divided into a plurality of sections, for example, a weather forecast section, an opening section, a news 1 section, a news 2 section to a news n section, a closing section, and the like. In addition, each section may include a plurality of frames, and a mark indicating section information is provided in a region within each frame.

As illustrated in FIG. 4, each of frames included in a weather forecast section 410, an opening section 415, and a news 1 section 420 includes a circled mark with the number 12 indicating that the section is viewable by viewers aged 12 and above. That is, after the morning news begins, the controller 150 may control the display 120 to display a weather forecast, the opening of an announcer, and a news 1 section for reporting events that occurred last night which are viewable by viewers aged 12 and above.

In addition, since a news 2 section 425-1 and a news 3 section 430-1 include section information corresponding to a viewing restriction condition, the controller 150 may perform viewing restriction processing on the sections, and the controller 150 may control the display 120 not to display the news 2 section 425-1 and the news 3 section 430-1. That is, as illustrated in FIG. 2, when an option including contexts of suggestiveness and suicide is selected from viewing restriction conditions, the controller 150 may perform viewing restriction processing on a section including contexts related to suggestiveness or suicide in sections of contents.

That is, the news 1 section 420 displays a scene in which an announcer is saying that he or she will introduce events that occurred last night. When the news 2 section 425-1 and the news 3 section 430-1 include the news relating to suicide that occurred last night, the controller 150 performs viewing restriction processing on the news 2 section 425-1 and the news 3 section 430-1 according to the input viewing restriction condition.

In addition, marks indicating section information included in the news 2 section 425-1 and the news 3 section 430-1 are identical to the mark corresponding to suicide illustrated in FIG. 2. That is, the controller 150 compares the input viewing restriction condition with section information of each of a plurality of sections of contents. When the input viewing restriction condition and the section information are identical to each other, the controller 15 may perform viewing restriction processing on the section. Specifically, when marks of the input viewing restriction condition and the section information which indicate a viewing restriction option are identical to each other, the controller 150 may determine that the input viewing restriction condition and the section information are identical to each other.

In particular, FIG. 4 illustrates an example in which contexts of the news 2 section 425-1 and the news 3 section 430-1 are identical to a viewing restriction condition that is input and thus masking processing is performed on the sections. That is, the controller 150 may control the display 120 to display a section after viewing restriction processing by masking contents of a section before viewing restriction processing using an opaque and dark colored-screen. In addition, the controller 150 may also control an output unit (not shown) of the display apparatus 100 not to output audio by performing masking processing on audio of the contents.

Meanwhile, the news 2 section 425-1 and the news 3 section 430-1 on which masking processing is performed using a plurality of dotted lines are just illustrative. Alternatively, the sections may be masked by a screen including a message that "blocked according to viewing restriction condition" as shown in a news 2 section 425-2 and a news 3 section 430-2 of FIG. 5. In addition, the message and image which are included in the screen for making may vary according to types, characteristics, or user settings of the display apparatus 100. In addition, even in a case illustrated in FIG. 5, the controller 150 may control the output unit (not shown) so as to output audio that "blocked according to viewing restriction condition".

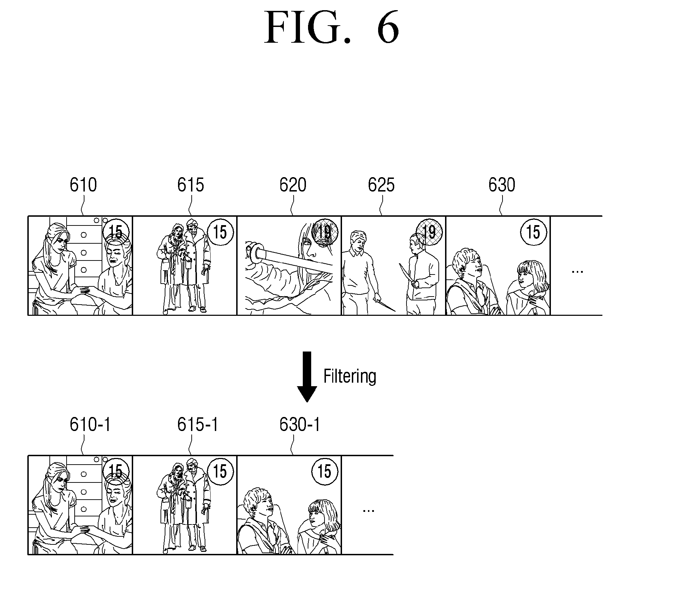

In addition, the controller 150 may control the display 120 to display a section on which viewing restriction processing is performed by performing mosaic processing for applying a mosaic effect to the section instead of displaying the section by performing masking processing thereon, or may control the display 120 to perform filtering processing for filtering the section on which viewing restriction processing is performed. FIG. 6 is a diagram illustrating an example in which filtering processing is performed.

FIG. 6 illustrates the display apparatus 100 displaying a movie as a whole. Specifically, in first, second, and fifth frames 610, 615, and 630, each frame includes a mark with the number "15" in a circle on the right upper side thereof. Thus, the first, second, and fifth frames 610, 615, and 630 indicate that a viewable age is 15 years old and above. However, marks on the right upper sides of third and fourth frames 620 and 625 include the number "19" in a circle, and is filled with diagonal lines in the same manner as the option of violence illustrated in FIG. 2. That is, the third and fourth frames 620 and 625 indicate that the contents are viewable by viewers aged 19 and above and that contexts of the frames are violence. Thus, when a viewing restriction condition is input to the display apparatus 100 through the user interface 130 so as to restrict a section including the context regarding violence, the controller 150 may perform filtering processing for filtering the third and fourth frames 620 and 625 of the contents.

That is, the controller 150 may perform masking processing, mosaic processing, or alternative image processing on the third and fourth frames 620 and 625 on which viewing restriction processing is performed, but performs filtering processing as illustrated in FIG. 6. Thus, the controller 150 may control the display 120 to remove the third and fourth frames 620 and 625 on which viewing restriction processing is performed from contents to be displayed, and to display the rest of contents. In particular, in recent years, smart TVs or IP TVs provided using a high-speed Internet network have become more common. Thus, when the receiver 110 receives contents through the Internet, the controller 150 may easily perform filtering processing on a section of the contents which corresponds to a viewing restriction condition.

Meanwhile, FIG. 7 illustrates an example in which the receiver 110 of the display apparatus 100 receives contents from the content transmission apparatus 200.

The content transmission apparatus 200 is an apparatus for providing contents to the display apparatus 100. The content transmission apparatus 200 may provide contents to the display apparatus 100 through an RF communication network or may provide contents to the display apparatus 100 through an IP communication network according to an aspect of the embodiment.

A method of transmitting a signal through an RF communication network and the configuration thereof may be modified in different manners according to broadcasting standards. Examples of a digital broadcasting standard include advanced television system committee (ATSC), digital video broadcasting (DVB), integrated services digital broadcasting-terrestrial (ISDB-T), and the like. For example, when an ATSC standard is employed, the content transmission apparatus 200 may include a randomization unit, an RS encoder, a data interleaver, a trellis encoder, a sync and pilot insertion unit, an 8VSB modulation unit, an RF up-converter, an antenna, and the like. In this case, the receiver 110 may include an antenna, an RF down-converter, a demodulation unit, an equalization unit, a demultiplexer, an RS decoder, a deinterleaver, and the like.

Meanwhile, in an embodiment in which contents are transmitted through an IP communication network, the content transmission apparatus 200 may be configured as a web server, a cloud server, or the like. In this case, the receiver 110 may receive contents having various formats such as AVI, MP4, MPG, MOV, or WMV by using various protocols such as a real time protocol (RTP) or a hypertext transfer protocol (HTTP).

Meanwhile, as described above, section information may be recorded in each of video frames of contents transmitted from the content transmission apparatus 200. As illustrated in FIG. 7, when a transmission stream transmitted from the content transmission apparatus 200 is constituted by a header and a payload, the section information may be recorded in the header or the payload in accordance with a standard, or may be recorded in a reserve region separately provided.

The section information may include at least one of: viewing restriction age information and context information for each section of contents included in each section. The viewing restriction age information is information indicating an age capable of viewing contents, and the context information for each section is a comprehensive concept including details, a topic, a connection, an atmosphere, and the like of contents included in each section. In addition, a context for each section may be subdivided according to setting of the content transmission apparatus 200, a contract between a content producer, a content provider, and a content receiver, or types, characteristics, or the like of the display apparatus 100.

That is, the section information may be simply set as "viewing restriction age 12", "viewing restriction age 15", "viewing restriction age 19: suggestiveness", and "viewing restriction age 19: violence", or may be set by being subdivided in the following: "viewing restriction age 8: animation", "viewing restriction age 8: movie", "viewing restriction age 8: drama", "viewing restriction age 8: singer", "viewing restriction age 12: animation", "viewing restriction age 12: movie", "viewing restriction age 12: drama", "viewing restriction age 12: singer", "viewing restriction age 15: singer", "viewing restriction age 15: animation", "viewing restriction age 15: movie", "viewing restriction age 15: drama", "viewing restriction age 19: suggestiveness", "viewing restriction age 19: violence", "viewing restriction age 19: suicide", "viewing restriction age 19: bullying", "viewing restriction age 19: blood", and the like.

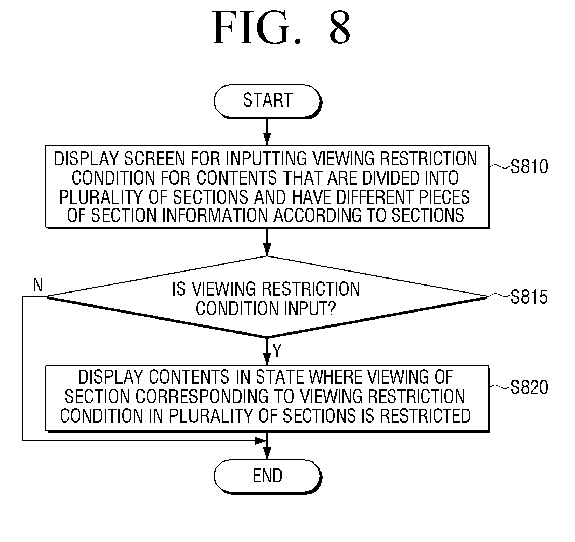

Meanwhile, FIG. 8 is a flow chart illustrating a case where the display apparatus 100 displays some sections of contents of which viewing is restricted, according to an embodiment of the present invention.

The display 120 displays the screen 300 for inputting a viewing restriction condition for contents that are divided into a plurality of sections and have different pieces of section information according to the sections (operation S81 0). The term "viewing restriction condition" as used herein means a condition for imposing restrictions not to perform a display on the display 120. That is, the term "viewing restriction condition" as used herein means a condition for controlling the display 120 not to display a section of contents which includes a specific context, and the context is a comprehensive concept including details, a topic, a connection, an atmosphere and the like of contents which are included in each section.

The screen 300 for inputting a viewing restriction condition may display a plurality of viewing restriction conditions so as to receive a user command to select at least one viewing restriction condition, or may include a condition search window so as to receive a user command to search for and select a viewing restriction condition and may display the condition search window.

The controller 150 determines whether a viewing restriction condition is input through the user interface 130 (operation S815). That is, the user interface 130 may receive a user command, as a viewing restriction condition, for restricting viewing of a section including at least one of specific viewing restriction age information and a specific context. The controller 150 may compare each section of contents divided into a plurality of sections with the input viewing restriction condition and may perform viewing restriction processing on a section having section information corresponding to the viewing restriction condition. In addition, since at least one viewing restriction condition may be input, a plurality of the viewing restriction conditions may be input.

In particular, the controller 150 may control the display 120 to display a frame including a mark indicating section information. The controller 150 may perform viewing restriction processing on a frame including a mark indicating section information corresponding to the viewing restriction condition input to the user interface 130.

In particular, when the display 120 of the display apparatus 100 includes a touch screen, the user interface 130 receiving a viewing restriction condition may be included in the display 120, or may be configured as a remote controller or a mobile phone. When the user interface 130 is configured as a remote controller or a mobile phone, the user interface 130 may remotely receive a user command.

When it is determined that the viewing restriction condition is input to the user interface (operation S815-Y), the display 120 displays contents in a state where viewing of a section corresponding to the viewing restriction condition in a plurality of sections is restricted (operation S820).

That is, the controller 150 may control the display 120 to display the contents in a state where viewing of a section corresponding to the viewing restriction condition in a plurality of sections is restricted. Specifically, the controller 150 may control the receiver 110 to receive contents constituted by a plurality of sections including section information, and may compare the plurality of sections received with the viewing restriction condition intput to the user interface 130 and perform viewing restriction processing. In addition, the controller 150 may control the display 120 to perform alternative image display processing for displaying an alternative image during a section of contents on which viewing restriction processing is performed, filtering processing for filtering a section corresponding to the viewing restriction condition, masking processing for masking the section corresponding to the viewing restriction condition, mosaic processing for applying a mosaic effect to the section corresponding to the viewing restriction condition, and the like.

Thus, the display of contents in a state where viewing is restricted means the display of contents on which alternative image processing, filtering processing, masking processing, or mosaic processing is performed.

As described above, according to various embodiments of the present invention, a user may set various viewing restriction conditions and may block sections of contents which correspond to the set viewing restriction conditions. The user may easily set the viewing restriction condition, and may maximize user convenience by automatically converting or filtering an image of a section in which the blocked contents is displayed.

A display method of the display apparatus according to the above-mentioned various embodiments may be coded as software and may be stored in a non-transitory readable medium. Such a non-transitory readable medium may be used by being mounted to various apparatuses.

For example, a program code for performing an operation of displaying a screen for inputting a viewing restriction condition for contents that are divided into a plurality of sections and have pieces of section information, which are different from each other according to the sections, and an operation of displaying, when the viewing restriction condition is input, the contents in a state where viewing of a section corresponding to the viewing restriction condition in the plurality of sections is restricted, may be stored in a non-transitory readable medium and provided. Besides, the display method described in the above-mentioned various embodiments may be coded as a program and may be stored in a non-transitory readable medium.

The term "non-transitory readable medium" as used herein means a medium that semi-permanently stores data and is readable by a device, rather than a medium such as a register, a cache, or a memory which stores data for a short period of time. Specifically, the non-transitory readable medium may be, a CD, a DVD, a hard disk, a blu-ray disk, a USB, a memory card, a ROM, or the like.

The foregoing exemplary embodiments and advantages are merely exemplary and are not to be construed as limiting the present invention. The present teaching may be readily applied to other types of apparatuses. Also, the description of the exemplary embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display method of a display apparatus, the method comprising:
displaying a screen for inputting a viewing restriction condition for contents that are divided into a plurality of sections and have different pieces of section information according to the sections; and
displaying the contents in a state where viewing of a section corresponding to the viewing restriction condition in the plurality of sections is restricted.

2. The display method of claim 1, wherein the displaying of the contents comprises:
comparing section information of each of the plurality of sections with the input viewing restriction condition; and
performing viewing restriction processing on a section having section information corresponding to the viewing restriction condition in the plurality of sections.

3. The display method of claim 1 or claim 2, wherein the section information comprises at least one of viewing restriction age information and context information

4. The display method of any one of claims 1 to claim 3, wherein the section is divided into at least one frame, and a mark indicating associated section information is provided in a region within each frame.

5. The display method of any one of claim 1 to claim 4,
wherein the screen for setting a viewing restriction condition comprises a plurality of viewing restriction options in which a viewing restriction age and a context are combined, and
wherein at least one of colors and shapes of the plurality of viewing restriction options are different from each other according to the options.

6. The display method of any one of claim 2 to claim 4, wherein the viewing restriction processing comprises at least one of: alternative image display processing for displaying an alternative image during a section corresponding to the viewing restriction section, filtering processing for filtering the section corresponding to the viewing restriction condition, masking processing for masking the section corresponding to the viewing restriction condition, and mosaic processing for applying a mosaic effect to the section corresponding to the viewing restriction condition.

7. A display apparatus comprising:
a receiver to receive contents divided into a plurality of sections and having different pieces of section information according to the sections;
a display unit;
a user interface to input a viewing restriction condition;
a storage to store the viewing restriction condition; and
a controller to control the display to display the contents in a state where viewing of a section corresponding to the viewing restriction condition in the plurality of sections is restricted.

8. The display apparatus of claim 7, wherein the controller compares section information of each of the plurality of sections with the input viewing restriction condition, and performs viewing restriction processing on a section having section information corresponding to the viewing restriction condition in the plurality of sections.

9. The display apparatus of claim 7 or claim 8, wherein the section information comprises at least one of viewing restriction age information and context information.

10. The display apparatus of any one of claim 7 to claim 9, wherein the section is divided into at least one frame, and a mark indicating associated section information is provided in a region within each frame.

11. The display apparatus of any one of claim 7 to claim 10,
wherein the screen for setting a viewing restriction condition comprises a plurality of viewing restriction options in which a viewing restriction age and a context are combined, and
wherein at least one of colors and shapes of the plurality of viewing restriction options are different from each other according to the options.

12. The display apparatus of any one of claim 8 to claim 11, wherein the viewing restriction processing comprises at least one of: alternative image display processing for displaying an alternative image during a section corresponding to the viewing restriction section, filtering processing for filtering the section corresponding to the viewing restriction condition, masking processing for masking the section corresponding to the viewing restriction condition, and mosaic processing for applying a mosaic effect to the section corresponding to the viewing restriction condition.

## Amended claims

### Amended claims in accordance with Rule 137(2) EPC.

1. A display method of a display apparatus, the method comprising:
inputting a viewing restriction condition for video data contents comprising a plurality of video frames that are divided into a plurality of sections, with each section comprising at least one frame and which have different pieces of section information according to the sections; and
displaying the video data contents;
wherein the displaying comprises, when the mark included in the each frame matches a mark corresponding to the input viewing restriction condition, restricting displaying of a frame including the mark matching the mark corresponding to the input viewing restriction condition.

2. The display method of claim 1, wherein the section information comprises at least one of viewing restriction age information and context information.

3. The display method of claim 1 or claim 2,
wherein the screen for setting a viewing restriction condition comprises a plurality of viewing restriction options in which a viewing restriction age and a context are combined, and
wherein at least one of colors and shapes of the plurality of viewing restriction options are different from each other according to the options.

4. The display method of any one of claim 1 to claim 3, wherein the viewing restriction processing comprises at least one of: alternative image display processing for displaying an alternative image during a section corresponding to each restricted section, filtering processing for filtering each restricted section , masking processing for masking each restricted section , and mosaic processing for applying a mosaic effect to each restricted section.

5. A display apparatus comprising:
a receiver to receive video data contents comprising a plurality of video frames divided into a plurality of sections, with each section comprising at least one frame and having different pieces of section information according to the sections;
a display unit;
a user interface to input a viewing restriction condition;
a storage to store the viewing restriction condition; and
a controller to control the display to display the video data contents
wherein each frame of the video data contents includes a mark indicating the section information,
wherein the controller, when the mark included in the each frame matches a mark corresponding to the input viewing restriction condition, is arranged to restrict displaying of a frame including the mark matching the mark corresponding to the input viewing restriction.

6. The display apparatus of claim 5, wherein the section information comprises at least one of viewing restriction age information and context information.

7. The display apparatus of claim 5 or claim 6,
wherein the screen for setting a viewing restriction condition comprises a plurality of viewing restriction options in which a viewing restriction age and a context are combined, and
wherein at least one of colors and shapes of the plurality of viewing restriction options are different from each other according to the options.

8. The display apparatus of any one of claim 6 to claim 7, wherein the viewing restriction processing comprises at least one of: alternative image display processing for displaying an alternative image during each restricted section, filtering processing for filtering each restricted section , masking processing for masking each restricted section , and mosaic processing for applying a mosaic effect to each restricted section.
